# EUROPEAN PATENT APPLICATION

(11) **EP 4 717 560 A1**
(43) Date of publication of application: **01.04.2026**
(21) Application number: 24881562.3
(22) Date of filing: 21.10.2024
(51) Int. Cl.: B62D 15/02, B62D 5/04, H02K 11/225, H02K 29/12

(54) **STEER-BY-WIRE SYSTEM AND AUTOMOBILE**

(30) Priority: 23.10.2023 CN 202311374618; 23.10.2023 CN 202322846407 U; 23.10.2023 CN 202311374619
(71) Applicant: Hangzhou TsingWayne Technology Co., Ltd., Zhejiang Province, 311305 (CN)
(72) Inventor: LV, Dengke, Hangzhou, Zhejiang 311305 (CN)
(74) Representative: Barker Brettell LLP
(86) International application number: PCT/CN2024/126213
(87) International publication number: WO 2025/087197

(57) **Abstract**

A steer-by-wire system and an automobile are provided. The steer-by-wire system includes a force-feedback electric motor (100) and a rotational-angle displacement sensor (510). The force-feedback electric motor (100) includes an inner stator (110) and an outer rotor (120), where the inner stator (110) is configured to be connected to a body of the automobile, and the outer rotor (120) is configured to be connected to a steering wheel to rotate along with the steering wheel. The rotational-angle displacement sensor (510) is fixedly connected to the inner stator (110) and detects a rotation angle of the outer rotor (120) based on an eddy current principle. Since the sensor that uses the eddy current principle has the characteristics of high reliability, high sensitivity, strong anti-interference ability, non-contact measurement, high-speed response, and being unaffected by media such as oil and water during long-term operation, the rotational-angle displacement sensor (510) that uses the eddy current principle has more reliable detection precision and has no detection distortion compared with TMR sensors in the prior art, thereby ensuring user's safety during vehicle operation.

## Description

This application claims priority to Chinese patent application No. 202311374618.X, filed with the China National Intellectual Property Administration on October 23, 2023, entitled "Steer-by-Wire System for Automobile and Automobile", which is hereby incorporated by reference in its entirety.

This application claims priority to Chinese patent application No. 202322846407.3, filed with the China National Intellectual Property Administration on October 23, 2023, entitled "Sensor Integration Module, Steer-by-Wire System for Automobile and Automobile", which is hereby incorporated by reference in its entirety.

This application claims priority to Chinese patent application No. 202311374619.4, filed with the China National Intellectual Property Administration on October 23, 2023, entitled "Steer-by-Wire System for Automobile and Automobile", which is hereby incorporated by reference in its entirety.

### TECHNICAL FIELD

The present application relates to the technology field of automobiles, and more specifically, to a steer-by-wire system and an automobile.

### BACKGROUND

Steering systems of existing automobiles mainly include Hydraulic Power Steering (HPS) systems, Electro-Hydraulic Power Steering (EHPS) systems, Electric Power Steering (EPS) systems, and Steer-by-Wire (SBW) systems.

A road feel motor in the above steer-by-wire systems generally includes an outer stator fixed to a body of an automobile and an inner rotor rotating synchronously and connected with a steering wheel. The steer-by-wire system detects a rotation angle of the inner rotor relative to the outer stator through a TMR sensor to determine a rotation angle of the steering wheel. Among them, TMR refers to "Tunneling Magneto resistance (Tunneling Magneto resistance)", which is a sensor technology that utilizes the tunnel magnetoresistance effect.

Since a change speed of a resistance value of the TMR sensor is related to the change of external magnetic field, it is easily interfered by external electromagnetic field. This also leads to that an existing steer-by-wire system, which uses the TMR sensor to detect a rotation angle of the road feel motor, is extremely susceptible to external electromagnetic influence, resulting in inaccurate detection results and thus affecting the user's steering control of the automobile.

### SUMMARY

A purpose of the present application is to solve the problem that rotational-angle sensors in existing steer-by-wire systems are susceptible to interference from external electromagnetic fields, which affects their detection accuracy.

A further purpose of the present application is how to determine a steering angle of a steering wheel, when a signal output by a rotational-angle displacement sensor has periodic variation.

To achieve the above purposes, a first aspect of embodiments of the present application provides a steer-by-wire system, the steer-by-wire system including:
a force-feedback motor, including an inner stator and an outer rotor, where the inner stator is configured to be connected to a body of an automobile; the outer rotor is configured to be connected to a steering wheel to rotate along with the steering wheel;
a rotational-angle displacement sensor, fixedly connected to the inner stator and detecting a rotation angle of the outer rotor based on an eddy current principle.

In a possible implementation, the steer-by-wire system further includes a to-be-detected component, the to-be-detected component is fixedly connected to or integrally formed with the outer rotor, and the to-be-detected component is configured to be detectable by the rotational-angle displacement sensor, so that the rotational-angle displacement sensor determines the rotation angle of the outer rotor by detecting the to-be-detected component.

In a possible implementation,
the to-be-detected component is arranged in a annular shape and is provided with a plurality of internal protruding teeth protruding toward an inner side thereof;
a sensing portion of the rotational-angle displacement sensor is arranged in a annular shape corresponding to the plurality of internal protruding teeth, so that the rotational-angle displacement sensor determines the rotation angle of the outer rotor by sensing the plurality of internal protruding teeth.

In a possible implementation,
the to-be-detected component is fixed to one end of the outer rotor close to the rotational-angle displacement sensor by a bolt or screw; and/or,
the to-be-detected component includes five internal protruding teeth.

In a possible implementation,
an outer side of a peripheral wall of the outer rotor is provided with a thread structure;
the steer-by-wire system includes a limit-stop seat, the limit-stop seat is arranged on an outer side of the outer rotor and is fixedly connected to or integrally formed with the inner stator, and the limit-stop seat is provided with a first sliding structure;
the steer-by-wire system includes a vernier block, the vernier block is provided with a thread matching structure engaged with the thread structure and a second sliding structure slidably connected to the first sliding structure, so that the vernier block linearly moves along an extending direction of the first sliding structure when the outer rotor rotates;
the steer-by-wire system includes a linear displacement sensor, the linear displacement sensor is configured to detect a linear displacement of the vernier block.

In a possible implementation, a side of the limit-stop seat facing the outer rotor is provided with a countersunk groove for accommodating the vernier block, and each of two opposite side walls of the countersunk groove is provided with the first sliding structure.

In a possible implementation,
the first sliding structure is a sliding groove formed on an inner side of each of the side walls, and the second sliding structure is a protrusion provided at an end of the vernier block.

In a possible implementation,
the side of the limit-stop seat facing the outer rotor is provided with a placement groove, the placement groove is located at one end of the countersunk groove, so that the vernier block is put into the limit-stop seat from the placement groove and slides into the countersunk groove;
the placement groove is further located on an outer side of the thread structure in an axial direction of the outer rotor to prevent the vernier block from sliding out of the countersunk groove when the steer-by-wire system is in an assembled state.

In a possible implementation,
the limit-stop seat is provided with a sensor accommodating groove on a bottom wall of the countersunk groove, and the sensor accommodating groove is configured to accommodate the linear displacement sensor to fix the linear displacement sensor on the limit-stop seat.

In a possible implementation,
the limit-stop seat is provided with a linear fixing hole in the bottom wall, so that the bolt or screw passes through the linear fixing hole to fix the linear displacement sensor.

In a possible implementation, the steer-by-wire system further includes a motor fixing member,
the motor fixing member is fixedly connected to or integrally formed with the inner stator, and the motor fixing member is configured to be connected to the body of the automobile to fix the inner stator on the body of the automobile;
the motor fixing member is fixedly connected to or integrally formed with the limit-stop seat.

In a possible implementation,
the motor fixing member is a tube column, one end of the tube column close to the inner stator is provided with an axial fixing part having an axial hole and a radial fixing part having a radial hole, the axial fixing part is fixedly connected to the inner stator through the axial hole by means of the bolt or screw, and the radial fixing part is fixedly connected to the limit-stop seat through the radial hole by means of the bolt or screw.

In a possible implementation,
the extending direction of the first sliding structure is parallel to a rotating shaft of the outer rotor; and/or,
the vernier block is overall dumbbell-shaped with a thin middle and two thick ends in a direction perpendicular to the extending direction of the first sliding structure; and/or,
the thread structure is an internal thread, and the thread matching structure is an external thread; and/or,
the number of turns of the thread structure around the rotating shaft of the outer rotor is three; and/or,
the thread structure is arranged on the outer side of the peripheral wall of the outer rotor; and/or,
each of two ends of the outer rotor in an extending direction of the thread structure is provided with a limit-stop boss, and each of two ends of the vernier block corresponding to the extending direction of the thread structure is provided with a limit-stop pin, so that the vernier block abuts against the limit-stop boss through the limit-stop pin.

In a possible implementation, the steer-by-wire system further includes a sensor integration module, the sensor integration module includes a housing for accommodating the rotational-angle displacement sensor and the linear displacement sensor,
the housing includes a first mounting part for mounting the rotational-angle displacement sensor and a second mounting part for mounting the linear displacement sensor,
the first mounting part is fixedly connected to the axial fixing part of the tube column, and the second mounting part is fixedly connected to the limit-stop seat;
a connector, electrically connected to the rotational-angle displacement sensor or the linear displacement sensor to output signals of the rotational-angle displacement sensor and the linear displacement sensor.

In a possible implementation, the first mounting part is provided with a first mounting groove for mounting the rotational-angle displacement sensor, and the second mounting part is provided with a second mounting groove for mounting the linear displacement sensor.

In a possible implementation, the first mounting part is provided with a clearance hole in a bottom wall of the first mounting groove, and the connector is electrically connected to the rotational-angle displacement sensor and extends through the clearance hole.

In a possible implementation, a first cover plate and a second cover plate are further included,
the first cover plate is mounted on the first mounting part to shield the first mounting groove;
the second cover plate is mounted on the second mounting part to shield the second mounting groove.

In a possible implementation, the first mounting part is overall in a flat annular-shape, and the second mounting part is overall in a flat strip-shape.

In a possible implementation, the first mounting part is perpendicular to the second mounting part; and/or,
the second mounting part is located at one end of the first mounting part in a radial direction of the first mounting part; and/or,
the second mounting part includes a first side part located on one side of the first mounting part and a second side part located on the other side of the first mounting part, and the first side part has a length greater than that of the second side part.

In a possible implementation, the first mounting part is provided with at least one counterbore at a position close to the second mounting part, and an opening direction of the counterbore is the same as a depth direction of the first mounting groove; a side of the first mounting part away from an opening of the first mounting groove is provided with a first fixing post, and the first fixing post is provided with a threaded hole, so that the first mounting part is fixed through the counterbore and the first fixing post;
the axial fixing part is provided with rotation-angle fixing holes corresponding to the counterbore and the first fixing post respectively, so that the first mounting part is fixed to the axial fixing part through the counterbore, the first fixing post and the rotation-angle fixing holes; and/or,
each of two sides of the second mounting part in a width direction thereof is provided with a second fixing post, the second fixing post is provided with a threaded hole, and the limit-stop seat is provided with a linear fixing hole, so that the second mounting part is fixed to the limit-stop seat through the second fixing post and the linear fixing hole.

A second aspect of embodiments of the present application further provides an automobile, including the steer-by-wire system according to any one of the first aspect.

Based on the foregoing description, those skilled in the art can understand that in the foregoing technical solutions of the present invention, the rotational-angle displacement sensor fixedly connected to the inner stator detects the rotation angle of the outer rotor based on the eddy current principle, thereby realizing the detection of the steering angle of the steering wheel. Meanwhile, since the sensor that uses the eddy current principle has the characteristics of high reliability, high sensitivity, strong anti-interference ability, non-contact measurement, high response speed, and being unaffected by media such as oil and water during long-term operation (this is common knowledge in the art), the rotational-angle displacement sensor that uses the eddy current principle in the present invention has more reliable detection accuracy and has no detection distortion compared with TMR sensors in the prior art, thereby ensuring user's safety during vehicle operation.

Meanwhile, as described in the background art, the existing road feel motor is an inner rotor motor. Due to the small radial size of its inner rotor (i.e., rotating shaft), only a magnetic sensor (i.e., TMR sensor) is suitable for placement therein. Therefore, it is impossible to arrange a rotational-angle displacement sensor that has certain radial requirements and adopts the eddy current principle. However, the present invention creatively uses a combination of an outer rotor motor and the rotational-angle displacement sensor, so that the steer-by-wire system of the present invention is more accurate and reliable in detecting the steering angle of the steering wheel compared with the prior art.

Furthermore, by providing a thread structure on the outer rotor, providing a limit-stop seat fixedly connected to or integrally formed with the inner stator, providing a first sliding structure on the limit-stop seat, providing a vernier block having a thread matching structure and a second sliding structure, and making the vernier block engage with the thread structure on the outer rotor through the thread matching structure and slidably connect to the first sliding structure on the limit-stop seat through the second sliding structure, the vernier block can linearly move along an extending direction of the first sliding structure when the outer rotor rotates, thereby converting a rotational displacement of the outer rotor into a linear displacement. In the present invention, by providing a linear displacement sensor for detecting the linear displacement of the vernier block, the displacement of the vernier block can also be determined through the linear displacement sensor when a signal output by the rotational-angle displacement sensor has periodic variation, then a signal cycle in which the signal detected by the rotational-angle displacement sensor currently lies is determined according to the displacement, and finally an absolute value of the steering wheel angle is determined according to the signal cycle and signal magnitude. Therefore, the present invention can also accurately detect the absolute value of the steering wheel angle.

Alternatively, when the signal output by the rotational-angle displacement sensor has periodic variation, a signal cycle in which the signal detected by the rotational-angle displacement sensor currently lies can also be determined by counting the number of signal cycles of the rotational-angle displacement sensor, and whether the steering wheel turns left or right can be determined according to the change trend of the signal of the rotational-angle displacement sensor, thereby determining the absolute value of the steering wheel angle.

Other beneficial effects of the present invention will be described in detail later in conjunction with the accompanying drawings, so that those skilled in the art can more clearly understand the improvement purpose, characteristics and advantages of the present invention.

### BRIEF DESCRIPTION OF DRAWINGS

FIG. 1 is a first exploded view of a steer-by-wire system in some embodiments of the present invention.
FIG. 2 is a second exploded view of a steer-by-wire system in some embodiments of the present invention.
FIG. 3 is a first axonometric view of a steer-by-wire system in some embodiments of the present invention.
FIG. 4 is a second axonometric view of a steer-by-wire system in some embodiments of the present invention.
FIG. 5 is an axonometric view of an outer rotor of a force-feedback motor in FIGS. 1 to 4.
FIG. 6 is a first axonometric view of a vernier block in FIGS. 1 and 2.
FIG. 7 is a second axonometric view of a vernier block in FIGS. 1 and 2.
FIG. 8 is a first axonometric view of a limit-stop seat in FIGS. 1 to 4.
FIG. 9 is a first axonometric view of a limit-stop seat in FIGS. 1 to 4.
FIG. 10 is a plan view of the limit-stop seat in FIG. 9 along the direction A.
FIG. 11 is a first axonometric view of a motor fixing member in FIGS. 1 to 4.
FIG. 12 is a second axonometric view of a motor fixing member in FIGS. 1 to 4.
FIG. 13 is a first exploded view of a sensor integration module in some embodiments of the present application.
FIG. 14 is a second exploded view of a sensor integration module in some embodiments of the present application.
FIG. 15 is a first axonometric view of a rotational-angle displacement sensor and a linear displacement sensor in FIGS. 13 and 14 that are in a connected state.
FIG. 16 is a second axonometric view of a rotational-angle displacement sensor and a linear displacement sensor in FIGS. 13 and 14 that are in a connected state.
FIG. 17 is a first axonometric view of a sensor integration module in some embodiments of the present application.
FIG. 18 is a second axonometric view of a sensor integration module in some embodiments of the present application.
FIG. 19 is a signal data diagram of steering wheel angle detection only by a linear displacement sensor in some embodiments of the present application.
FIG. 20 is a signal data diagram of steering wheel angle detection by both a rotational-angle displacement sensor and a linear displacement sensor in some embodiments of the present application.

### DESCRIPTION OF EMBODIMENTS

Those skilled in the art should understand that the embodiments described below are only part of the embodiments of the present invention, not all of the embodiments. This part of the embodiments is intended to explain the technical principle of the present invention, not to limit the protection scope of the present invention. Based on the embodiments provided by the present invention, all other embodiments obtained by those skilled in the art without creative work shall still fall within the protection scope of the present invention.

It should be noted that in the description of the present invention, terms indicating directions or positional relationships such as "center", "upper", "lower", "top", "bottom", "left", "right", "vertical", "horizontal", "inner", "outer" are based on the directions or positional relationships shown in the accompanying drawings, which are only for convenience of description, not indicating or implying that devices or elements must have a specific orientation, be constructed and operated in a specific orientation, and therefore cannot be understood as a limitation of the present invention. In addition, terms "first", "second", "third" are only configured for descriptive purposes, and cannot be understood as indicating or implying relative importance.

Furthermore, it should be noted that in the description of the present invention, unless otherwise clearly specified and limited, terms "mounted", "connection", "connected" should be understood in a broad sense. For example, it can be a fixed connection, a detachable connection, or an integral connection; it can be a mechanical connection or an electrical connection; it can be a direct connection, an indirect connection through an intermediate medium, or internal communication between two elements. For those skilled in the art, the specific meanings of the above terms in the present invention can be understood according to specific situations. For example, unless otherwise specified, terms "mounted", "connection", "connected" and "fixed" can be any feasible connection forms such as bolt connection, screw connection, welding, insertion connection, riveting, fusion welding, snap-fit connection, etc.

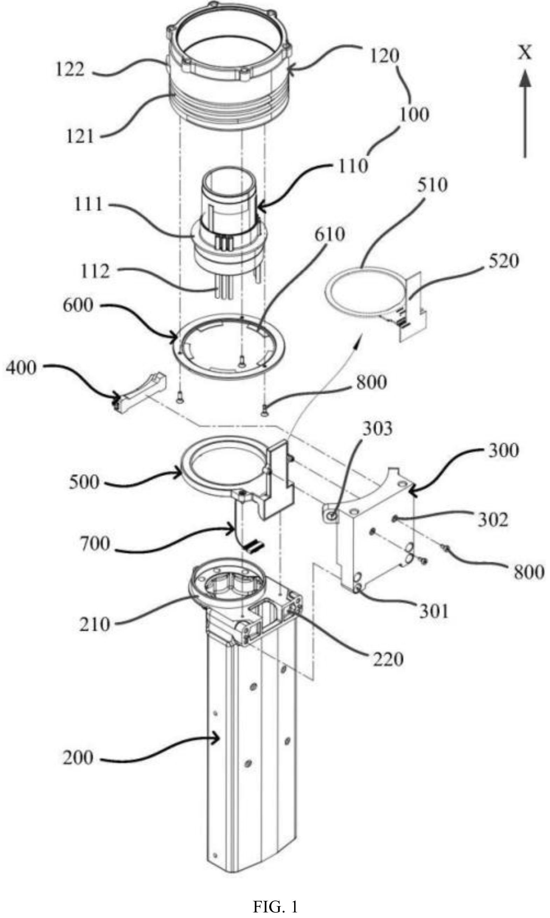

As shown in FIGS. 1 to 4, in some embodiments of the present invention, a steer-by-wire system for an automobile includes a force-feedback motor 100 and a rotational-angle displacement sensor 510.

Where, the force-feedback motor 100 includes an inner stator 110 and an outer rotor 120, the inner stator 110 is configured to be connected to a body of the automobile; the outer rotor 120 is configured to be connected to a steering wheel to rotate along with the steering wheel.

Where, the rotational-angle displacement sensor 510 is fixedly connected to the inner stator 110 and detects a rotation angle of the outer rotor 120 based on an eddy current principle.

Those skilled in the art should know that sensors which use the eddy current principle have the characteristics of high reliability, high sensitivity, strong anti-interference ability, non-contact measurement, high response speed, and being unaffected by media such as oil and water during long-term operation (this is common knowledge in the art). Therefore, in the present invention, accurate detection of a steering angle of the steering wheel is realized by allowing the rotational-angle displacement sensor 510 fixedly connected to the inner stator 110 to detect the rotation angle of the outer rotor 120 based on the eddy current principle, and detection results are more reliable. Meanwhile, the rotational-angle displacement sensor 510 of the present invention needs no magnet and has a low cost.

Furthermore, the above force-feedback motor 100 having the outer rotor 120 is creatively used in the present invention, so that the rotational-angle displacement sensor 510 can be used in the present invention to detect the rotation angle of the rotor of the force-feedback motor 100. Compared with the prior art in which only magnetic sensors that are easily interfered by external electromagnetic field are used due to a limitation on the radial size of inner rotors of road feel motors, a combination of the force-feedback motor 100 having the outer rotor 120 and the rotational-angle displacement sensor 510 is creatively used in the present invention, so that the detection of the steering angle of the steering wheel is more accurate and reliable.

The steer-by-wire system for the automobile in some embodiments of the present invention will be described in further detail below with reference to the accompanying drawings. It should be noted that X in the drawings of the present invention indicates a direction, which is intended to facilitate those skilled in the art to understand the drawings.

Continuing to refer to FIGS. 1 to 4, in some embodiments of the present invention, the steer-by-wire system for the automobile further includes a motor fixing member 200, a limit-stop seat 300, a vernier block 400 and a linear displacement sensor 520. The motor fixing member 200 is fixedly connected to or integrally formed with the inner stator 110, and the motor fixing member 200 is configured to be connected to the body of the automobile, so that the inner stator 110 is fixed to the body of the automobile. Moreover, the outer rotor 120 is provided with a thread structure 121.

Furthermore, the limit-stop seat 300 is fixedly connected to or integrally formed with the motor fixing member 200. Moreover, the limit-stop seat 300 is arranged on an outer side of the outer rotor 120 and is fixedly connected to or integrally formed with the inner stator 110. The limit-stop seat 300 is provided with a first sliding structure 310. The vernier block 400 is provided with a thread matching structure 410 engaged with the thread structure 121 and a second sliding structure 420 slidably connected to the first sliding structure 310, so that the vernier block 400 linearly moves along an extending direction of the first sliding structure 310 when the outer rotor 120 rotates.

Where, the linear displacement sensor 520 is configured to detect a linear displacement of the vernier block 400.

The steer-by-wire system with the above structure in the present invention can detect, by the linear displacement sensor 520, the steering angle of the outer rotor 120 and the steering wheel connected to the outer rotor 120. Meanwhile, since in the present invention the steering angle of the outer rotor 120 is determined by detecting the linear displacement of the vernier block 400, the signal will not appear repeatedly after the steering wheel rotates 360 degrees in the present invention, so that the present invention can detect an absolute value of the rotation angle of the outer rotor 120 and the steering wheel.

In addition, in other embodiments of the present invention, those skilled in the art can also omit the motor fixing member 200 as needed, and make the inner stator 110 and the limit-stop seat 300 fixedly connected or integrally formed, and make the inner stator 110 directly fixed to the body of the automobile. For example, the inner stator 110 is fixed to a structure such as a tube column, a boss, a groove fixedly connected to the body of the automobile through bolts/screws.

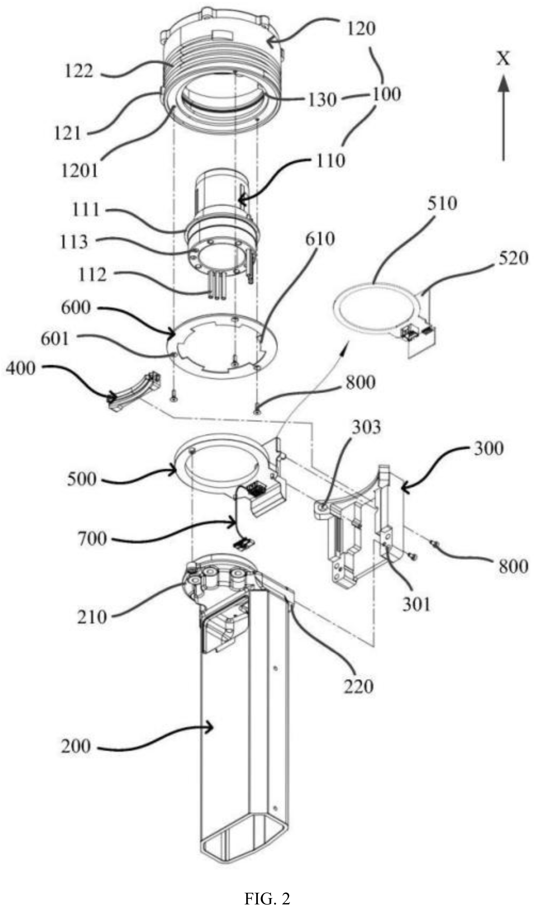

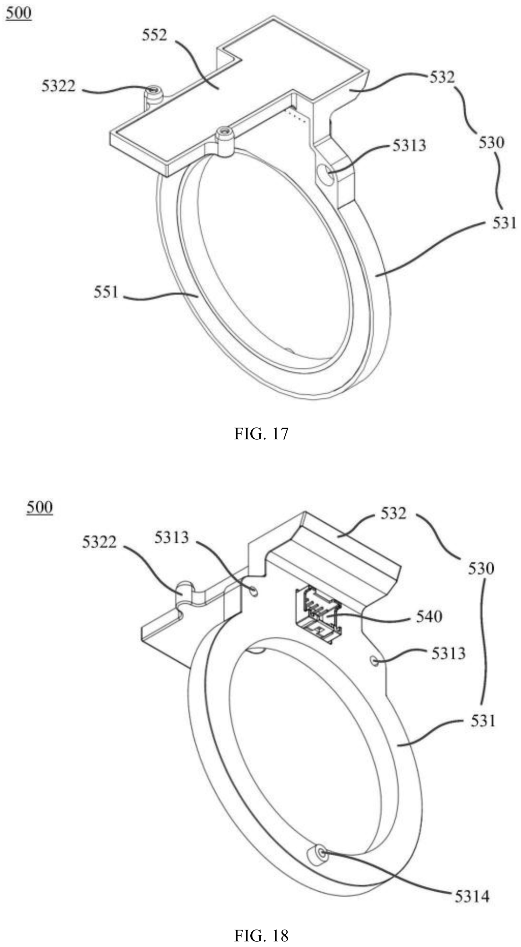

As shown in FIGS. 1 and 2, in some embodiments of the present invention, the steer-by-wire system further includes a sensor integration module 500, and the sensor integration module 500 is fixedly connected to the limit-stop seat 300. The sensor integration module 500 includes the aforementioned rotational-angle displacement sensor 510 and linear displacement sensor 520. Where, the linear displacement sensor 520 is configured to detect the linear displacement of the vernier block 400. Therefore, when the signal output by the rotational-angle displacement sensor 510 exhibits periodic variation (as shown in FIG. 17), a signal cycle in which a signal detected by the rotational-angle displacement sensor 510 currently lies is determined according to the linear displacement of the vernier block 400. This will be described in detail later.

Since in the present invention an absolute value of the rotation angle of the outer rotor 120 relative to the inner stator 110 can be detected through the linear displacement sensor 520 as described above, those skilled in the art can also omit the rotational-angle displacement sensor 510 as needed in other embodiments of the present invention.

In some embodiments of the present invention, the feedback motor 100 can provide a torque opposite to a rotation direction of the steering wheel when a user turns the steering wheel, and can also provide a road-feel-information torque to the steering wheel. Since the above applications of the force-feedback motor 100 are provided in the prior art, no detailed description will be repeated herein.

As shown in FIGS. 1 to 4, as described above, in some embodiments of the present invention, the force-feedback motor 100 includes the inner stator 110 and the outer rotor 120. According to common knowledge in the art, those skilled in the art should understand that the outer rotor 120 is rotatable relative to the inner stator 110, and the outer rotor 120 can be fixedly connected to the inner stator 110 in an axial direction.

As shown in FIGS. 1 and 2, in some embodiments of the present invention, the inner stator 110 is provided with an annular external protruding shoulder 111 and an electric wire 112.

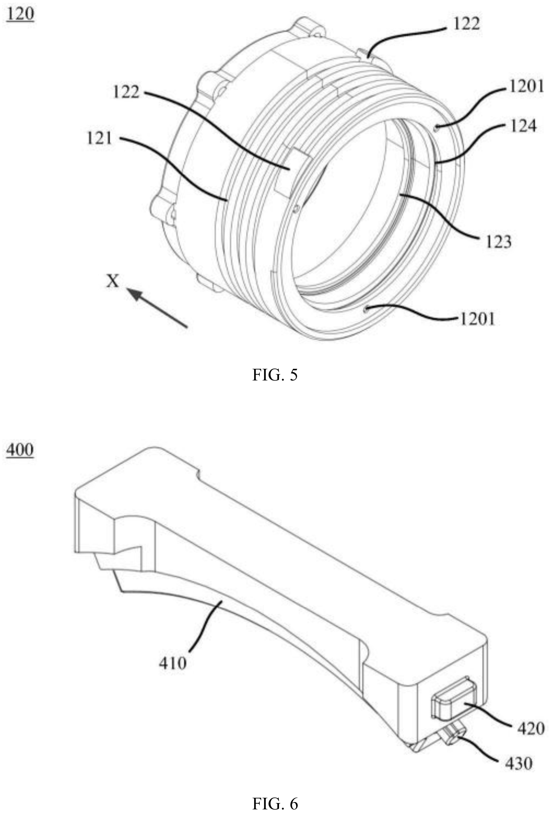

As shown in FIG. 5, in some embodiments of the present invention, an inner side of the outer rotor 120 is provided with an internal protruding shoulder 123 and a retaining groove 124.

As shown in FIGS. 1 and 2, in some embodiments of the present invention, the force-feedback motor 100 further includes a retaining spring 130 embedded in the retaining groove 124 of the outer rotor 120. Based on this, those skilled in the art can understand that when the force-feedback motor 100 is in an assembled state, the inner stator 110 is located at the inner side of the outer rotor 120, and the external protruding shoulder 111 on the inner stator 110 is axially located between the internal protruding shoulder 123 and the retaining groove 124, so that the internal protruding shoulder 123 and the retaining spring 130 limit the axial displacement of the external protruding shoulder 111, thereby realizing an axial fixation between the outer rotor 120 and the inner stator 110.

It should be noted that on the premise of achieving the purpose of the present invention, the specific form of the force-feedback motor 100 is not limited to the one described in the accompanying drawings and the foregoing. Those skilled in the art can also select a suitable force-feedback motor 100 as needed.

As shown in FIGS. 5 to 7, in some embodiments of the present invention, the thread structure 121 on the outer rotor 120 is an internal thread, and the thread matching structure 410 on the vernier block 400 is an external thread. Alternatively, those skilled in the art can also set the thread matching structure 410 on the vernier block 400 as a protrusion structure such as a cylinder engaged with the internal thread as needed.

In addition, in other embodiments of the present invention, those skilled in the art can also set the thread structure 121 on the outer rotor 120 as an external thread and set the thread matching structure 410 on the vernier block 400 as an internal thread as needed.

Furthermore, in some embodiments of the present invention, the number of turns of the thread structure 121 around a rotating shaft of the outer rotor 120 can be any feasible number of turns, such as one turn, two turns, two and a half turns, three turns, etc.

It can also be seen from FIG. 5 that in some embodiments of the present invention, the thread structure 121 is arranged on an outer side of a peripheral wall of the outer rotor 120. In addition, those skilled in the art can also make the outer rotor 120 longer than the inner stator 110 as needed, and make the thread structure 121 provided on an inner side of the peripheral wall of the outer rotor 120; and make appropriate adjustments to the positions and structures of the limit-stop seat 300 and the vernier block 400.

Furthermore, a clearance fit can be provided between the thread structure 121 and the thread matching structure 410 to ensure that the two can slide smoothly relative to each other.

Continuing to refer to FIGS. 5 to 7, in some embodiments of the present invention, each of two ends of the outer rotor 120 in an extending direction of the thread structure 121 is provided with a limit-stop boss 122, and each of two ends of the vernier block 400 corresponding to the extending direction of the thread structure 121 is provided with a limit-stop pin 430, so that the vernier block 400 abuts against the limit-stop boss 122 through the limit-stop pin 430 to prevent the thread matching structure 410 on the vernier block 400 from being separated from the thread structure 121 on the outer rotor 120. Where, the specific structures of the limit-stop boss 122 and the limit-stop pin 430 can be the same as or different from those shown in the accompanying drawings.

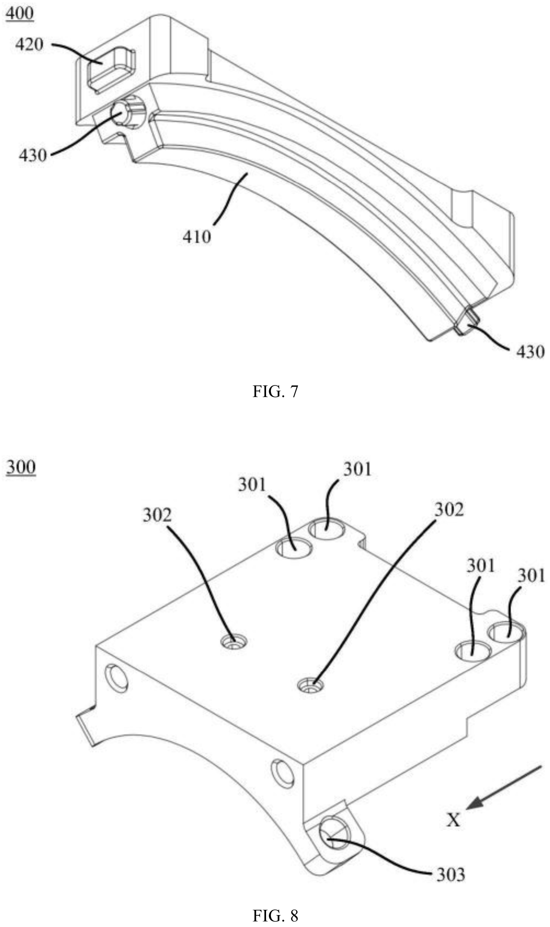

Furthermore, it can be seen from FIGS. 6 and 7 that the vernier block 400 is overall dumbbell-shaped with a thin middle and two thick ends. In addition, those skilled in the art can also set the vernier block 400 into any other feasible shape as needed, such as a long strip shape, a rectangular shape, a square shape, etc.

As shown in FIGS. 1 to 4 and 8 to 10, the limit-stop seat 300 is provided with mounting holes 301 for fixing the limit-stop seat 300 to the motor fixing member 200, linear fixing holes 302 for fixing the linear displacement sensor 520, and damping holes 303 for mounting damping screws. The damping screws abut against the outer rotor 120 to provide rotational resistance (friction force) to the outer rotor 120 when the outer rotor 120 rotates.

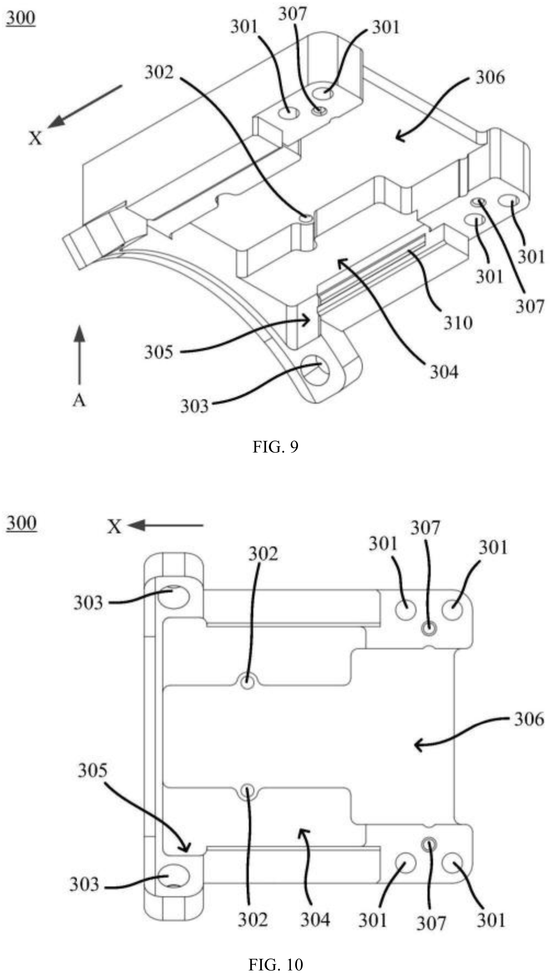

As shown in FIGS. 9 and 10, a side of the limit-stop seat 300 facing the outer rotor 120 is provided with a countersunk groove 304 for accommodating the vernier block 400, and the first sliding structure 310 is provided on each of two opposite side walls of the countersunk groove 304.

It can be seen from FIGS. 6, 7 and 9 that the first sliding structure 310 on the limit-stop seat 300 is a sliding groove formed on an inner side of the side wall, and the second sliding structure 420 on the vernier block 400 is a protrusion provided on each end of the vernier block 400. In addition, those skilled in the art can also set the first sliding structure 310 as a strip-shaped protrusion and set the second sliding structure 420 as a sliding groove as needed.

Furthermore, in some embodiments of the present invention, the extending direction of the first sliding structure 310 is parallel to the rotating shaft of the outer rotor 120 of the force-feedback motor 100. Alternatively, those skilled in the art can also make the extending direction of the first sliding structure 310 form an included angle with the rotating shaft of the outer rotor 120 of the force-feedback motor 100 (such as 1°, 3°, 5°, 15°, etc.) as needed.

Continuing to refer to FIGS. 9 and 10, the side of the limit-stop seat 300 facing the outer rotor 120 is provided with a placement groove 305, the placement groove 305 is located on one end of the countersunk groove 304, so that the vernier block 400 is put into the limit-stop seat 300 from the placement groove 305 and slides into the countersunk groove 304. The placement groove 305 is further located at an outer side of the thread structure 121 in the axial direction of the outer rotor 120 to prevent the vernier block 400 from sliding out of the countersunk groove 304 when the steer-by-wire system is in assembled state.

Continuing to refer to FIGS. 9 and 10, the limit-stop seat 300 is provided with a sensor accommodating groove 306 on a bottom wall of the countersunk groove 304. The sensor accommodating groove 306 is configured to accommodate the linear displacement sensor 520 to fix the linear displacement sensor 520 on the limit-stop seat 300 and prevent the linear displacement sensor 520 from interfering with the vernier block 400. Moreover, linear fixing holes 302 are located in the sensor accommodating groove 306.

Continuing to refer to FIGS. 9 and 10, the side of the limit-stop seat 300 facing the outer rotor 120 is further provided with positioning holes 307 to position the limit-stop seat 300 on the motor fixing member 200 through the positioning holes 307.

It can be seen from FIGS. 1 to 4 that in some embodiments of the present invention, the motor fixing member 200 is a tube column. Of course, those skilled in the art can also set the motor fixing member 200 as any other feasible component as needed, such as a fixing seat in the shape of a rectangular block, a plate, L-shape, T-shape, etc.

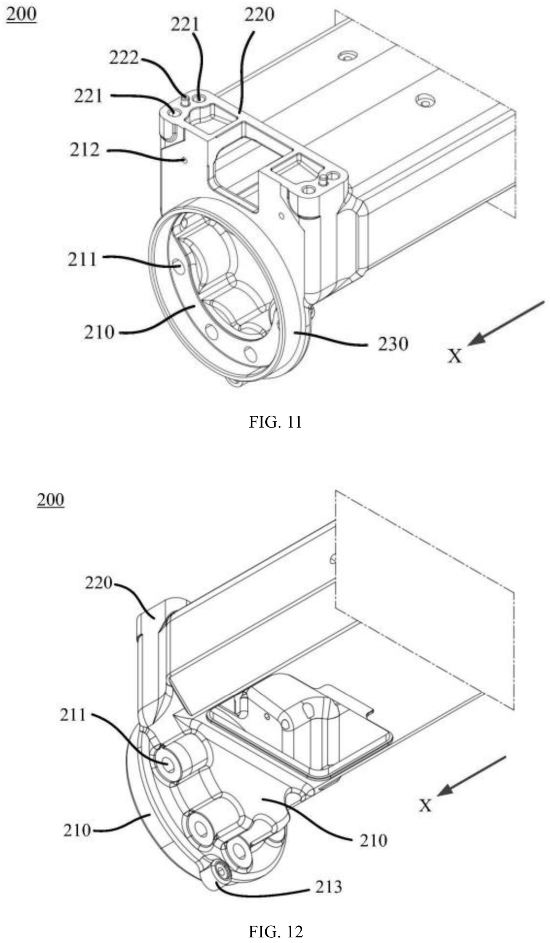

As shown in FIGS. 11 and 12, in some embodiments of the present invention, one end of the tube column close to the inner stator 110 is provided with an axial fixing part 210 having axial holes 211 and a radial fixing part 220 having radial holes 221. The axial fixing part 210 is fixedly connected to the inner stator 110 through the axial holes 211 by means of bolts/screws, and the radial fixing part 220 is fixedly connected to the limit-stop seat 300 through the radial holes 221 by means of bolts/screws.

Correspondingly, as shown in FIG. 2, a side of the inner stator 110 of the force-feedback motor 100 facing the motor fixing member 200 is provided with a plurality of motor fixing holes 113. Optionally, the motor fixing holes 113 are threaded holes, and the axial holes 211 are through holes. Therefore, bolts 800 pass through the axial holes 211 and then are screwed into the motor fixing holes 113, respectively, thereby fixing the inner stator 110 and the axial fixing part 210 together.

Furthermore, the radial holes 221 on the radial fixing part 220 are threaded holes, and the mounting holes 301 on the limit-stop seat 300 are through holes. Therefore, the bolts 800 pass through the mounting holes 301 and then are screwed into the radial holes 221 respectively, thereby fixing the limit-stop seat 300 and the radial fixing part 220 together. Where, the number of the radial holes 221 and mounting holes 301 may be four respectively as shown in the drawings, or any other feasible number.

As shown in FIGS. 11 and 12, in some embodiments of the present invention, the radial fixing part 220 is further provided with positioning posts 222 corresponding to the positioning holes 307 in the limit-stop seat 300. Therefore, when the limit-stop seat 300 is fixed to the motor fixing member 200, the positioning posts 222 are inserted into the positioning holes 307 at first, thereby realizing positioning between the limit-stop seat 300 and the motor fixing member 200, and aligning the mounting holes 301 in the limit-stop seat 300 with the radial holes 221 in the radial fixing part 220, and thus facilitating an operator in installing bolts.

Continuing to refer to FIGS. 11 and 12, in some embodiments of the present invention, a side of the axial fixing part 210 facing the force-feedback motor 100 is further provided with a rotation-angle fixing hole 212, and a side of the axial fixing part 210 away from the force-feedback motor 100 is further provided with a hollow post 213. Therefore, the sensor integration module 500 is fixed through the rotation-angle fixing hole 212 and the hollow post 213 by means of bolts/screws. The side of the axial fixing part 210 facing the force-feedback motor 100 is further provided with a positioning ring 230 to position the sensor integration module 500 for installation.

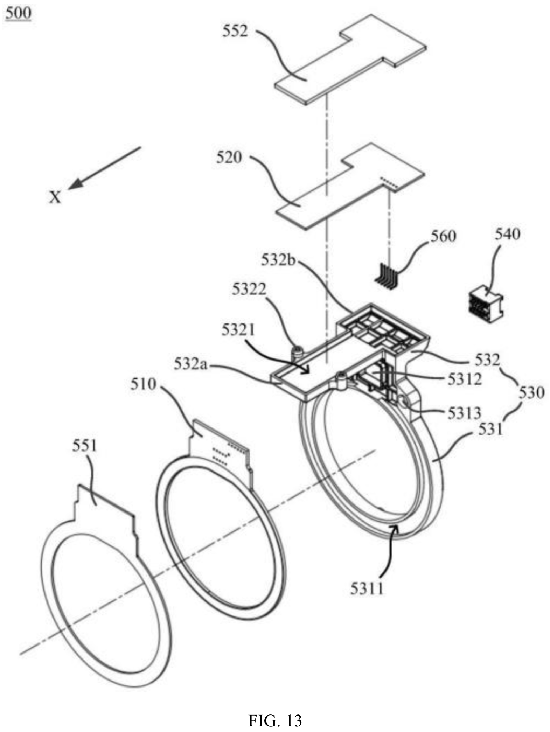

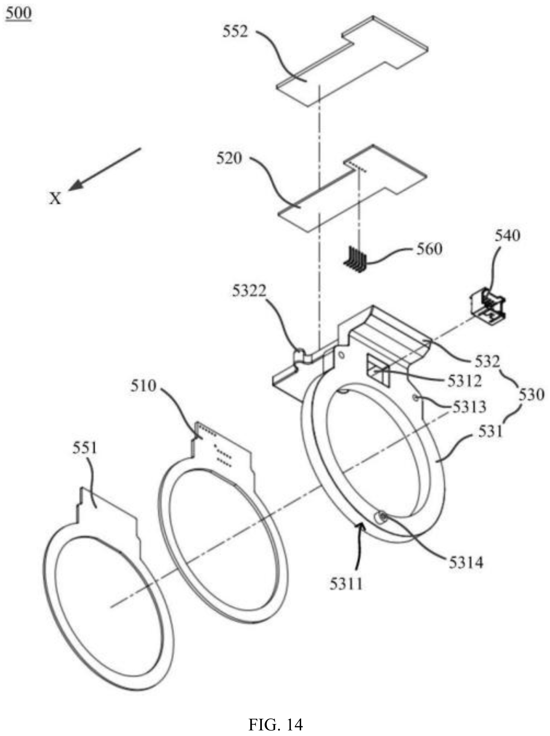

As shown in FIGS. 13 and 14, in some embodiments of the present invention, the sensor integration module 500 includes the rotational-angle displacement sensor 510 (as described above), the linear displacement sensor 520, a housing 530 and a connector 540.

Where, the rotational-angle displacement sensor 510 and the linear displacement sensor 520 are electrically connected, and both are eddy current sensors. In addition, those skilled in the art can also set the linear displacement sensor 520 as any other feasible sensor as needed, such as a photoelectric sensor, a capacitive sensor, etc.

Where, the housing 530 includes a first mounting part 531 for mounting the rotational-angle displacement sensor 510 and a second mounting part 532 for mounting the linear displacement sensor 520. Moreover, the housing 530 is an integrally formed component, or an integral component with a certain structural strength formed by welding, screw connection, riveting, etc.

Where, the connector 540 is electrically connected to the rotational-angle displacement sensor 510 or the linear displacement sensor 520 to output signals of the rotational-angle displacement sensor 510 and the linear displacement sensor 520.

It can be seen from FIGS. 13 and 14 that in some embodiments of the present invention, the first mounting part 531 is overall in a flat annular-shape, and larger than the positioning ring 230 on the motor fixing member 200. The second mounting part 532 is overall in a flat strip-shape, and adapted to the sensor accommodating groove 306 on the limit-stop seat 300. In addition, those skilled in the art can also set the first mounting part 531 and the second mounting part 532 into any other feasible structures as needed, such as setting the first mounting part 531 into a solid circular shape.

It should be noted that in the present invention, the annular shape refers to a hollow and peripherally closed shape, which is not limited to a circular ring shape, but can also be an elliptical ring shape, a rectangular ring shape, a square frame shape, etc.

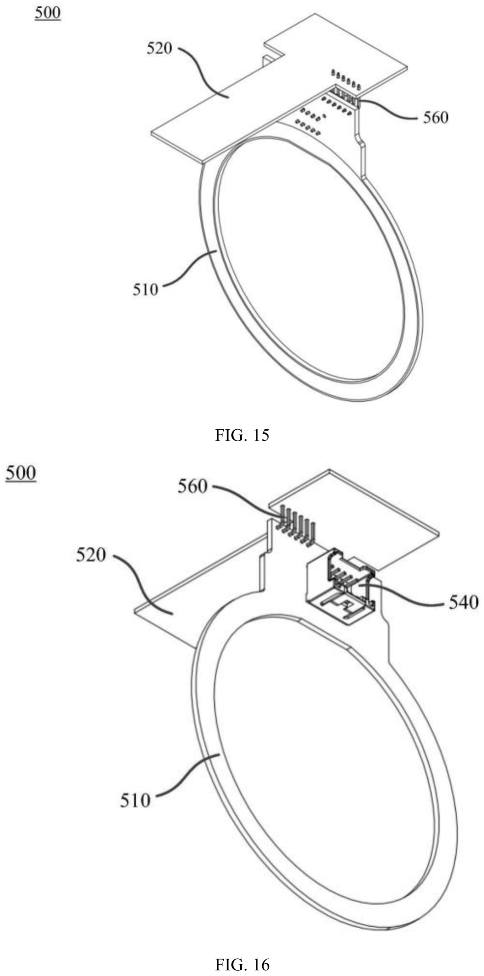

Continuing to refer to FIGS. 13 to 16, the first mounting part 531 is provided with a first mounting groove 5311 for mounting the rotational-angle displacement sensor 510, and the second mounting part 532 is provided with a second mounting groove 5321 for mounting the rotational-angle displacement sensor 510. Moreover, the first mounting part 531 is provided with a clearance hole 5312 on a bottom wall of the first mounting groove 5311. The connector 540 is electrically connected to the rotational-angle displacement sensor 510 and extends through the clearance hole 5312. This ensures normal signal output of the sensor integration module 500, and reduces the thickness of the first mounting part 531.

Furthermore, the first mounting part 531 can be perpendicular to the second mounting part 532 to facilitate the processing, manufacturing and assembling of the housing 530 and components related to the housing 530. Meanwhile, this allows the rotational-angle displacement sensor 510 and the linear displacement sensor 520 to form a 90° angle.

Furthermore, the second mounting part 532 can be located at one end of the first mounting part 531 in a radial direction to facilitate the manufacturing and demolding of the housing 530.

Furthermore, the second mounting part 532 can include a first side part 532a located at one side of the first mounting part 531 and a second side part 532b located at the other side of the first mounting part 531. The first side part 532a has a length greater than that of the second side part 532b, so as to accommodate the linear displacement sensor 520 and form a T-shaped junction between the second mounting part 532 and the first mounting part 531, thereby increasing the structural strength of the junction.

Continuing to refer to FIGS. 13 and 14, the first mounting part 531 is provided with at least one counterbore 5313 at a position close to the second mounting part 532. The opening direction of the counterbore 5313 is the same as the depth direction of the first mounting groove 5311. A side of the first mounting part 531 away from the opening of the first mounting groove 5311 is provided with a first fixing post 5314. The first fixing post 5314 is provided with a threaded hole. Therefore, the first mounting part 531 is fixed through the counterbore 5313 and the first fixing post 5314.

Where, the counterbore 5313 corresponds to the rotation-angle fixing hole 212 in the motor fixing member 200, and the first fixing post 5314 corresponds to the hollow post 213 on the motor fixing member 200. Therefore, the two corresponding structures are connected together through the bolt 800, thereby fixing the first mounting part 531 on the motor fixing member 200.

Continuing to refer to FIGS. 13 and 14, two sides of the second mounting part 532 in the width direction thereof are respectively provided with second fixing posts 5322, and the second fixing posts 5322 are provided with threaded holes, so that the second mounting part 532 is fixed through the second fixing posts 5322.

Where, the second fixing post 5322 corresponds to the linear fixing hole 302 in the limit-stop seat 300, and the two are connected together through the bolt 800, thereby fixing the second mounting part 532 on the limit-stop seat 300.

Continuing to refer to FIGS. 13, 14, 17 and 18, the sensor integration module 500 further includes a first cover plate 551 and a second cover plate 552. The first cover plate 551 is mounted on the first mounting part 531 to shield the first mounting groove 5311; the second cover plate 552 is mounted on the second mounting part 532 to shield the second mounting groove 5321. The rotational-angle displacement sensor 510 and the linear displacement sensor 520 are thereby enclosed by the housing 530, the first cover plate 551 and the second cover plate 552, so that they are prevented from contacting the outside and suffering collision, thereby effectively avoiding the rotational-angle displacement sensor 510 and the linear displacement sensor 520 from being damaged.

Where, each of the first cover plate 551 and the second cover plate 552 can be mounted to the housing 530 in any feasible way, such as snap-fit connection, bonding, screw connection, welding, etc.

Furthermore, in some embodiments of the present application, at least one of the housing 530, the first cover plate 551 and the second cover plate 552 can be made of plastic.

As shown in FIGS. 13 to 16, the sensor integration module 500 further includes a plurality of PIN pins 560, so that the rotational-angle displacement sensor 510 and the linear displacement sensor 520 are electrically connected together through the plurality of PIN pins 560, thereby enabling the linear displacement sensor 520 to send a detected signal to the rotational-angle displacement sensor 510 through the PIN pins 560, and the signal is then output through the connector 540 electrically connected to the rotational-angle displacement sensor 510.

Where, the PIN pin 560 is of a metal substance used in a connector to complete the conduction (transmission) of electricity (signals), which is an existing component well known to those skilled in the art, so the present invention will not be described in detail.

Based on the foregoing description, those skilled in the art can understand that in the present application the rotational-angle displacement sensor 510 and the linear displacement sensor 520 are electrically connected, and the connector 540 electrically connected to the rotational-angle displacement sensor 510 or the linear displacement sensor 520 is provided, so that the signals of both the rotational-angle displacement sensor 510 and the linear displacement sensor 520 can be output through the connector 540, facilitating the electrical connection between the sensor integration module 500 and its signal receiver. Compared with the prior art where respective sensors are connected to the signal receiver through signal lines respectively, the present application also reduces the number of signal lines and lowers costs.

Referring back to FIGS. 1 and 2, in some embodiments of the present invention, the steer-by-wire system may further include a signal line 700 plugged into the connector 540 to transmit the signal output by the connector 540 to a signal processing unit, module or device through the signal line 700.

It can be seen from FIGS. 13 to 16 that in some embodiments of the present invention, both the rotational-angle displacement sensor 510 and the linear displacement sensor 520 are in the form of circuit boards, on which components such as excitation coils and receiving coils are printed to perform detection based on the eddy current principle. Since the principle of detecting a to-be-detected object by using the eddy current principle as well as corresponding sensors are prior art well known to those skilled in the art, no detailed description will be repeated herein.

Referring back to FIGS. 2 and 5, in some embodiments of the present invention, the steer-by-wire system further includes a to-be-detected component 600. The to-be-detected component 600 is fixedly connected to the outer rotor 120. The to-be-detected component 600 is configured to be detectable by the rotational-angle displacement sensor 510, so that the rotational-angle displacement sensor 510 determines the rotation angle of the outer rotor 120 by detecting the to-be-detected component 600.

Furthermore, the to-be-detected component 600 is provided with a measurement through hole 601, and one end of the outer rotor 120 facing the to-be-detected component 600 is provided with a measurement fixing hole 1201 corresponding to the measurement through hole 601 (as shown in FIGS. 2 and 5). The measurement fixing hole 1201 is a threaded hole, so that the bolt 800 passes through the measurement through hole 601 and then is screwed into the threaded hole, thereby fixing the to-be-detected component 600 on the outer rotor 120.

Furthermore, the end of the outer rotor 120 facing the to-be-detected component 600 is further provided with an accommodating groove for accommodating the to-be-detected component 600 so as to protect the to-be-detected component 600 and prevent the to-be-detected component 600 from suffering collision during transportation and use.

In addition, those skilled in the art can also make the to-be-detected component 600 integrally formed with the outer rotor 120 as needed; or omit the to-be-detected component 600 and set a structure with the above internal protruding teeth 610 on the outer rotor 120.

As shown in FIGS. 1 and 2, the to-be-detected component 600 is arranged in a annular shape and is provided with the plurality of internal protruding teeth 610 protruding toward an inner side thereof. A sensing portion of the rotational-angle displacement sensor 510 (a portion having excitation coils and receiving coils) is arranged in a annular shape corresponding to the plurality of internal protruding teeth 610 (as described above), so that the rotational-angle displacement sensor 510 determines the rotation angle of the outer rotor 120 by sensing the plurality of internal protruding teeth 610.

Optionally, the to-be-detected component 600 includes five internal protruding teeth 610, so that the rotational-angle displacement sensor 510 outputs five signal cycles when the steering wheel rotates one circle. Alternatively, those skilled in the art can also make the to-be-detected component 600 include other numbers of the internal protruding teeth 610 as needed, such as three, six, seven, eight, etc.

Furthermore, in the present invention, both the to-be-detected component 600 and the vernier block 400 are made of metal materials such as 40Cr and 304 that can affect the magnetic field.

Furthermore, although not shown in the figure, the present invention also provides an automobile, including the steer-by-wire system described in any one of the foregoing embodiments. Moreover, the outer rotor 120 of the force-feedback motor 100 is drivingly connected to the steering wheel of the automobile, so that the outer rotor 120 of the force-feedback motor 100 rotates synchronously with the steering wheel. For example, the outer rotor 120 of the force-feedback motor 100 is fixedly connected to the steering shaft of the steering wheel.

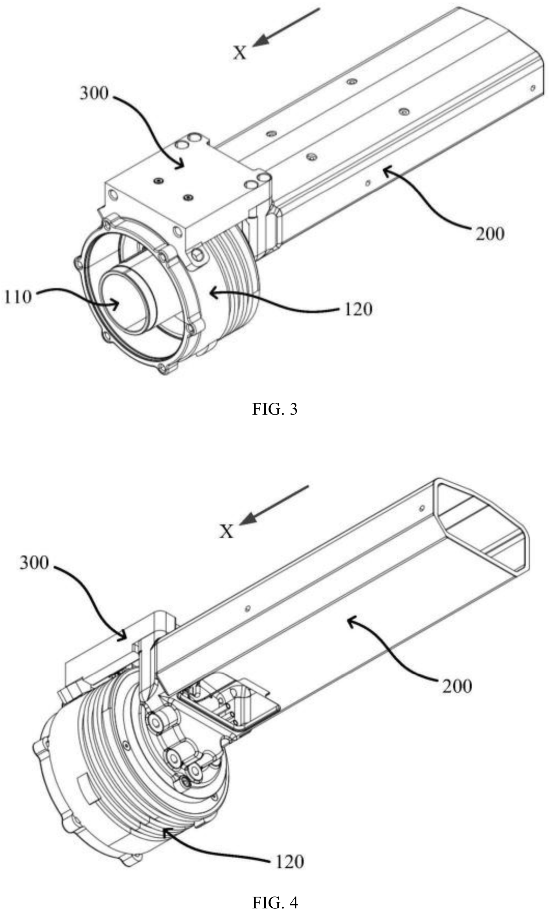

As shown in FIG. 3, one end of the outer rotor 120 of the force-feedback motor 100 away from the motor fixing member 200 is provided with a plurality of connecting holes (not marked in the figure), and the outer rotor 120 is fixedly connected to the steering shaft of the steering wheel through the connecting holes by means of the bolts 800.

Furthermore, the motor fixing member 200 can be directly fixed to the body of the automobile, or fixedly connected to other columns fixed on the body of the automobile.

The working principle of the steer-by-wire system in the present invention will be briefly described below with reference to FIGS. 1 to 4.

When a driver turns the steering wheel, the outer rotor 120 rotates along with the steering wheel. Since the vernier block 400 can only move along the axial direction of the outer rotor 120 under the limitation of the limit-stop seat 300, the thread structure 121 on the outer rotor 120 will force the vernier block 400 to move along with the thread matching structure 410 thereof in the axial direction of the outer rotor 120. When the vernier block 400 abuts against the limit-stop boss 122 on the outer rotor 120, the steering wheel cannot continue to rotate.

During this process, the rotational-angle displacement sensor 510 detects the rotation angle of the outer rotor 120 by detecting the angular displacement of the to-be-detected component 600, and its output signal may have periodic variation. The linear displacement sensor 520 detects the rotation angle of the outer rotor 120 by detecting the linear displacement of the vernier block 400, and its output signal has no periodic variation.

Then the operation of the steering motor is controlled by the automobile according to data detected by the rotational-angle displacement sensor 510 and/or the linear displacement sensor 520, thereby changing the automobile's front-wheel steering.

In the present invention, the automobile and its steer-by-wire system can detect the rotation angle of the steering wheel only through the rotational-angle displacement sensor 510, or through both the rotational-angle displacement sensor 510 and the linear displacement sensor 520.

When the rotation angle of the steering wheel only needs to be detected through the rotational-angle displacement sensor 510, those skilled in the art can omit the linear displacement sensor 520 and its related components (such as the limit-stop seat 300 and the vernier block 400) as needed. Moreover, those skilled in the art can also retain only necessary components such as the rotational-angle displacement sensor 510 and the connector 540 in the sensor integration module 500 as needed, and make the rotational-angle displacement sensor 510 directly fixed on the inner stator 110 of the force-feedback motor 100 or the motor fixing member 200.

When the rotation angle of the steering wheel only needs to be detected through the linear displacement sensor 520, those skilled in the art can omit the rotational-angle displacement sensor 510 and its related components (such as the to-be-detected component 600) as needed. Moreover, those skilled in the art can also retain only necessary components such as the linear displacement sensor 520 and the connector 540 in the sensor integration module 500 as needed, and make the linear displacement sensor 520 directly fixed on the limit-stop seat 300.

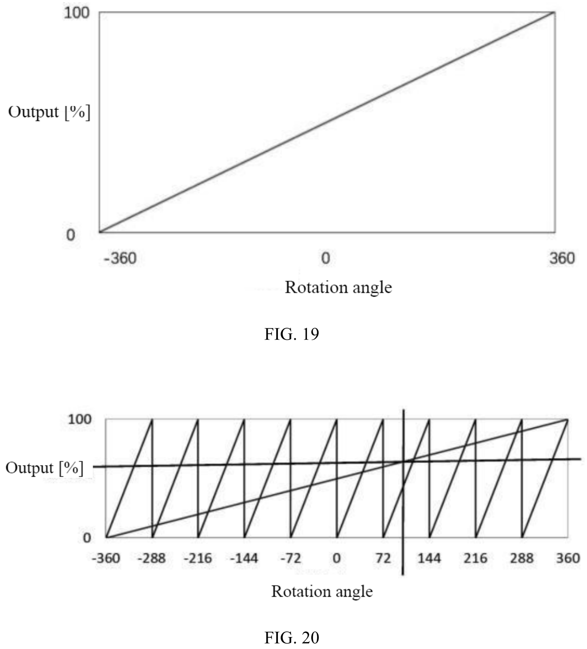

Output signals obtained from the above three steering wheel angle detection methods in the present invention will be described in detail below with reference to FIGS. 19 and 20.

In FIGS. 19 and 20, a inclined straight line represents a signal output by the linear displacement sensor 520; a periodic wavy line represents a signal output by the rotational-angle displacement sensor 510; 0 in the abscissa represents an steering wheel angle at which the automobile moves forward; -360 and 360 represent steering wheel angles at which the steering wheel is actually turned to the left/right, respectively; and the ordinate represents the percentage of an actual moving displacement of the vernier block 400 relative to its actual maximum moving displacement.

It can be seen from FIG. 20 that there is a corresponding relationship between linear-displacement signals of the vernier block 400 output by the linear displacement sensor 520 and all signal cycles output by the rotational-angle displacement sensor 510, that is, each signal cycle output by the rotational-angle displacement sensor 510 corresponds to a unique set of signals output by the linear displacement sensor 520. Therefore, the present invention enables those skilled in the art to determine, on the basis of the signal output by the linear displacement sensor 520, a signal cycle in which the signal detected by the rotational-angle displacement sensor 510 currently lies.

Where, -360 and 360 on the abscissa can be determined according to an actual number of rotations of the steering wheel. For the convenience of description, the present invention illustrates only the scenario in which the steering wheel rotates one full turn to the left/right.

First method: as shown in FIG. 19, when the rotation angle of the steering wheel needs to be detected only through the linear displacement sensor 520, the signal output by the linear displacement sensor 520 is linear and there is no repetitive signal.

At this time, an angle corresponding to the signal output by the linear displacement sensor 520 is an absolute value of the rotation angle of the steering wheel.

As shown in FIG. 20, when the rotation angle of the steering wheel is detected through the rotational-angle displacement sensor 510, its signal is a periodic signal due to the number of internal protruding teeth 610 on the to-be-detected component 600 and the number of rotations of the steering wheel. At this time, a signal cycle in which the signal detected by the rotational-angle displacement sensor 510 currently lies can be determined by means of the linear displacement sensor 520.

Second method: continuing to refer to FIG. 20, when the rotation angle of the steering wheel needs to be detected through both the rotational-angle displacement sensor 510 and the linear displacement sensor 520, first a displacement of the vernier block 400 is determined through the linear displacement sensor 520 (such as a horizontal dotted line in FIG. 20), then a value range corresponding to the rotation angle of the steering wheel is determined according to the displacement (such as between 72° and 144° in FIG. 20), then a signal cycle in which the signal detected by the rotational-angle displacement sensor 510 currently lies is determined according to the determined value range (such as the signal cycle corresponding to 72° to 144° in FIG. 20), and finally an absolute value of the steering angle of the steering wheel is determined according to the signal cycle and signal magnitude.

Those skilled in the art can understand that the signal cycle in which the signal detected by the rotational-angle displacement sensor 510 currently lies is determined through the linear displacement sensor 520, and then the absolute value of the steering angle of the steering wheel is determined through the rotational-angle displacement sensor 510 according to the signal cycle; compared with the above method in which the steering angle of the steering wheel is detected only through the linear displacement sensor 520 (the thread matching structure 410 of the vernier block 400 and the thread structure 121 of the outer rotor 120 are in clearance fit), the larger the difference between signal data corresponding to two adjacent angles, the higher the precision of detection results.

Third method: referring to FIG. 20, when the rotation angle of the steering wheel needs to be detected only through the rotational-angle displacement sensor 510, a signal cycle in which a signal detected by the rotational-angle displacement sensor 510 currently lies can be determined by counting the number of signal cycles of the rotational-angle displacement sensor 510, and whether the steering wheel turns left or right can be determined according to the change trend of the signal of the rotational-angle displacement sensor 510.

Those skilled in the art can understand that the third way needs to ensure the reliability of counting the number of signal cycles of the rotational-angle displacement sensor 510, otherwise the cycle calculation will be erroneous, resulting in the inability to accurately determine the absolute value of the steering wheel angle.

Thus far, the technical solutions of the present invention have been described in conjunction with multiple embodiments above. However, those skilled in the art can easily understand that the protection scope of the present invention is not limited to these specific embodiments. Without departing from the technical principle of the present invention, those skilled in the art can split and combine the technical solutions in the above embodiments, and can also make equivalent changes or substitutions to related technical features. Any changes, equivalent substitutions, improvements, etc. made within the technical concept and/or technical principle of the present invention will fall within the protection scope of the present invention.

## Claims

1. A steer-by-wire system for an automobile, wherein the steer-by-wire system comprises:
a force-feedback motor, comprising an inner stator and an outer rotor, wherein the inner stator is configured to be connected to a body of the automobile; the outer rotor is configured to be connected to a steering wheel to rotate along with the steering wheel;
a rotational-angle displacement sensor, fixedly connected to the inner stator and detecting a rotation angle of the outer rotor based on an eddy current principle.

2. The steer-by-wire system according to claim 1, further comprising a to-be-detected component, the to-be-detected component is fixedly connected to or integrally formed with the outer rotor, and the to-be-detected component is configured to be detectable by the rotational-angle displacement sensor, so that the rotational-angle displacement sensor determines the rotation angle of the outer rotor by detecting the to-be-detected component.

3. The steer-by-wire system according to claim 2, wherein,
the to-be-detected component is arranged in a annular shape and is provided with a plurality of internal protruding teeth protruding toward an inner side thereof;
a sensing portion of the rotational-angle displacement sensor is arranged in a annular shape corresponding to the plurality of internal protruding teeth, so that the rotational-angle displacement sensor determines the rotation angle of the outer rotor by sensing the plurality of internal protruding teeth.

4. The steer-by-wire system according to claim 3, wherein,
the to-be-detected component is fixed to one end of the outer rotor close to the rotational-angle displacement sensor by a bolt or screw; and/or,
the to-be-detected component comprises five internal protruding teeth.

5. The steer-by-wire system according to any one of claims 1-4, wherein,
an outer side of a peripheral wall of the outer rotor is provided with a thread structure;
the steer-by-wire system comprises a limit-stop seat, the limit-stop seat is arranged on an outer side of the outer rotor and is fixedly connected to or integrally formed with the inner stator, and the limit-stop seat is provided with a first sliding structure;
the steer-by-wire system comprises a vernier block, the vernier block is provided with a thread matching structure engaged with the thread structure and a second sliding structure slidably connected to the first sliding structure, so that the vernier block linearly moves along an extending direction of the first sliding structure when the outer rotor rotates;
the steer-by-wire system comprises a linear displacement sensor, the linear displacement sensor is configured to detect a linear displacement of the vernier block.

6. The steer-by-wire system according to claim 5, wherein a side of the limit-stop seat facing the outer rotor is provided with a countersunk groove for accommodating the vernier block, and each of two opposite side walls of the countersunk groove is provided with the first sliding structure.

7. The steer-by-wire system according to claim 6, wherein,
the first sliding structure is a sliding groove formed on an inner side of each of the side walls, and the second sliding structure is a protrusion provided at an end of the vernier block.

8. The steer-by-wire system according to claim 7, wherein,
the side of the limit-stop seat facing the outer rotor is provided with a placement groove, the placement groove is located at one end of the countersunk groove, so that the vernier block is put into the limit-stop seat from the placement groove and slides into the countersunk groove;
the placement groove is further located on an outer side of the thread structure in an axial direction of the outer rotor to prevent the vernier block from sliding out of the countersunk groove when the steer-by-wire system is in an assembled state.

9. The steer-by-wire system according to claim 6, wherein,
the limit-stop seat is provided with a sensor accommodating groove on a bottom wall of the countersunk groove, and the sensor accommodating groove is configured to accommodate the linear displacement sensor to fix the linear displacement sensor on the limit-stop seat.

10. The steer-by-wire system according to claim 9, wherein,
the limit-stop seat is provided with a linear fixing hole in the bottom wall, so that the bolt or screw passes through the linear fixing hole to fix the linear displacement sensor.

11. The steer-by-wire system according to claim 5, further comprising a motor fixing member,
the motor fixing member is fixedly connected to or integrally formed with the inner stator, and the motor fixing member is configured to be connected to the body of the automobile to fix the inner stator on the body of the automobile;
the motor fixing member is fixedly connected to or integrally formed with the limit-stop seat.

12. The steer-by-wire system according to claim 11, wherein,
the motor fixing member is a tube column, one end of the tube column close to the inner stator is provided with an axial fixing part having an axial hole and a radial fixing part having a radial hole, the axial fixing part is fixedly connected to the inner stator through the axial hole by means of the bolt or screw, and the radial fixing part is fixedly connected to the limit-stop seat through the radial hole by means of the bolt or screw.

13. The steer-by-wire system according to claim 5, wherein,
the extending direction of the first sliding structure is parallel to a rotating shaft of the outer rotor; and/or,
the vernier block is overall dumbbell-shaped with a thin middle and two thick ends in a direction perpendicular to the extending direction of the first sliding structure; and/or,
the thread structure is an internal thread, and the thread matching structure is an external thread; and/or,
the number of turns of the thread structure around the rotating shaft of the outer rotor is three; and/or,
the thread structure is arranged on the outer side of the peripheral wall of the outer rotor; and/or,
each of two ends of the outer rotor in an extending direction of the thread structure is provided with a limit-stop boss, and each of two ends of the vernier block corresponding to the extending direction of the thread structure is provided with a limit-stop pin, so that the vernier block abuts against the limit-stop boss through the limit-stop pin.

14. The steer-by-wire system according to claim 12, further comprising:
a sensor integration module, the sensor integration module comprises a housing for accommodating the rotational-angle displacement sensor and the linear displacement sensor,
the housing comprises a first mounting part for mounting the rotational-angle displacement sensor and a second mounting part for mounting the linear displacement sensor,
the first mounting part is fixedly connected to the axial fixing part of the tube column, and the second mounting part is fixedly connected to the limit-stop seat;
a connector, electrically connected to the rotational-angle displacement sensor or the linear displacement sensor to output signals of the rotational-angle displacement sensor and the linear displacement sensor.

15. The steer-by-wire system according to claim 14, wherein the first mounting part is provided with a first mounting groove for mounting the rotational-angle displacement sensor, and the second mounting part is provided with a second mounting groove for mounting the linear displacement sensor.

16. The steer-by-wire system according to claim 15, wherein the first mounting part is provided with a clearance hole in a bottom wall of the first mounting groove, and the connector is electrically connected to the rotational-angle displacement sensor and extends through the clearance hole.

17. The steer-by-wire system according to claim 15, further comprising a first cover plate and a second cover plate,
the first cover plate is mounted on the first mounting part to shield the first mounting groove;
the second cover plate is mounted on the second mounting part to shield the second mounting groove.

18. The steer-by-wire system according to claim 14, wherein the first mounting part is overall in a flat annular-shape, and the second mounting part is overall in a flat strip-shape.

19. The steer-by-wire system according to claim 18, wherein the first mounting part is perpendicular to the second mounting part; and/or,
the second mounting part is located at one end of the first mounting part in a radial direction of the first mounting part; and/or,
the second mounting part comprises a first side part located on one side of the first mounting part and a second side part located on the other side of the first mounting part, and the first side part has a length greater than that of the second side part.

20. The steer-by-wire system according to claim 17, wherein the first mounting part is provided with at least one counterbore at a position close to the second mounting part, and an opening direction of the counterbore is the same as a depth direction of the first mounting groove; a side of the first mounting part away from an opening of the first mounting groove is provided with a first fixing post, and the first fixing post is provided with a threaded hole, so that the first mounting part is fixed through the counterbore and the first fixing post;
the axial fixing part is provided with rotation-angle fixing holes corresponding to the counterbore and the first fixing post respectively, so that the first mounting part is fixed to the axial fixing part through the counterbore, the first fixing post and the rotation-angle fixing holes; and/or,
each of two sides of the second mounting part in a width direction thereof is provided with a second fixing post, the second fixing post is provided with a threaded hole, and the limit-stop seat is provided with a linear fixing hole, so that the second mounting part is fixed to the limit-stop seat through the second fixing post and the linear fixing hole.

21. An automobile, comprising the steer-by-wire system according to any one of claims 1-20.
